# EUROPÄISCHE PATENTSCHRIFT

(11) **EP 2 111 468 B1**
(45) Veröffentlichungstag und Bekanntmachung des Hinweises auf die Patenterteilung: **14.07.2010**
(21) Anmeldenummer: 07845285.1
(22) Anmeldetag: 10.12.2007
(51) Int. Cl.: C22B 5/10, C22B 7/04

(54) **VERFAHREN ZUR REDUKTION VON OXIDISCHEN SCHLACKEN AUS STÄUBEN SOWIE INDUKTIV BEHEIZBARER OFEN ZUR DURCHFÜHRUNG DIESES VERFAHRENS**
METHOD FOR REDUCING OXIDIC SLAGS AND DUSTS AND INDUCTIVELY HEATABLE FURNACE FOR CARRYING OUT THIS METHOD
PROCÉDÉ DE RÉDUCTION DE SCORIES OXYDÉES PROVENANT DE POUSSIÈRES, ET FOUR POUVANT ÊTRE CHAUFFÉ PAR INDUCTION POUR SA MISE EN OEUVRE

(30) Priorität: 19.01.2007 AT 3507 U; 22.05.2007 AT 33007 U
(43) Veröffentlichungstag der Anmeldung: 28.10.2009
(73) Patentinhaber: Patco Engineering GmbH, 6300 Zug (CH)
(72) Erfinder: EDLINGER, Alfred, A-6780 Bartholomäberg (AT)
(74) Vertreter: Haffner, Thomas M.
(86) Internationale Anmeldenummer: PCT/AT2007/000556
(87) Internationale Veröffentlichungsnummer: WO 2008/086549

(56) Entgegenhaltungen:
- EP-A- 0 539 352
- EP-A- 0 661 507
- WO-A-03/070651
- WO-A-2006/079132
- DE-A1- 19 525 389
- GB-A- 2 247 305

## Beschreibung

Die Erfindung bezieht sich auf ein Verfahren zur Reduktion von oxidischen, ggf. mit Organika belasteten Schlacken und Stäuben mit auch sehr hohen Gehalten an Chrom- und Vanadiumschlacken (beispielsweise Edelstahl-Schlacken) unter Einsatz eines induktiv beheizbaren, sich in einer Achsrichtung erstreckenden und einen Temperaturgradienten aufweisenden Koksbettes sowie auf einen induktiv beheizbaren, mit einem stückigen Koksbett befüllbaren Schachtofen zur Reduktion von metallischen, ggf. mit Organika belasteten Schlacken aus elektrisch isolierendem, feuerfesten Material, in welchem ein Temperaturgradient einstellbar ist, mit wenigstens zwei voneinander unabhängig regelbaren und in unterschiedlichen axialen Bereichen des Schachtofens angeordneten, gekühlten Induktionskörpern.

In der WO 2006/079132 A1 wurde bereits ein Verfahren zum Reduzieren von metalloxidhaltigen Schlacken bzw. Gläsern und/oder Entgasen von mineralischen Schmelzen sowie eine entsprechende Vorrichtung zur Durchführung dieses Verfahrens vorgeschlagen, bei welcher die schmelzflüssigen Schlacken auf ein induktiv beheiztes Koksbett aufgegeben wurden, wobei die Charge einem im Wesentlichen abgeschlossenen Schachtreaktor zugeführt wurde und das Koksbett induktiv auf Temperaturen aufgeheizt wurde, welche sicherstellen sollten, dass sich bis zum Abstichende eine Schmelze ausbildet oder die Schmelztemperatur aufrecht erhalten wird. Bei dieser bekannten Vorrichtung wurde in unterschiedlichen axialen Teilbereichen des Schachtofens Sauerstoff zugeführt und der Schachtofen in verschiedenen Teilbereichen mit verschiedenen Frequenzen und verschiedener Energie induktiv beheizt. Das Redoxpotential des Bettes bzw. der Säule konnte bei dieser bekannten Einrichtung durch Einblasen von Gasen geregelt werden, wobei die bekannte Vorrichtung axial aufeinander folgende Abschnitte aufwies, welche über gesonderte Temperaturmesseinrichtungen und/oder Messeinrichtungen für die elektrische Leistungsaufnahme ausgestattet waren, um auf diese Weise eine entsprechende Regelung der Temperatur in den einzelnen Abschnitten zu gewährleisten. Wesentlich für die bekannte Vorrichtung war, dass die elektrische Energie unmittelbar in das Koksbett eingebracht wird, wobei die Wände bzw. das Gehäuse selbst aus Feuerfestmaterial ausgebildet waren, welches unter Anwendung der elektrischen Energie nicht aufgeheizt wurde und somit isolierend über denjenigen Temperaturbereich ausgebildet war, welcher im Bereich der Gehäusewände zu erwarten war. Das Gehäuse selbst war ebenso wie die Induktionskörper bzw. Induktionsspulen gekühlt ausgebildet, da ja die Induktionswärme durch die entsprechend leitfähigen Kokspartikel sichergestellt wurde.

Die Erfindung zielt nun darauf ab, ein Verfahren bzw. eine Einrichtung der beschriebenen Art dahingehend weiterzubilden, dass beliebige Einsatzmaterialien wie verzinkter Schrott, Shredder Leichtfraktion, mit Organika belasteter Walzwerkzunder, zinkhaltige Stäube, Klärschlammverbrennungsasche, welche P₂O₅, Fe₂O₃, CaO, Al₂O₃, ZnO etc. enthalten kann, und Elektroschrott in einfacher Weise aufgearbeitet werden können und Schadstoffe ohne Ausbildung von internen Kreisläufen nahezu quantitativ abgezogen werden können. Weiters dient die Erfindung dazu, das Verfahren so durchzuführen, dass auf die geschlossene Ausbildung eines Kupolofens verzichtet werden kann und ein einfacher Schacht mit offenem kalten Aufgabeende zum Einsatz gelangen kann, ohne dass an dieser Stelle der Austritt von Schadstoffen befürchtet werden muss. Durch die bekannte Verwendung von isolierenden Werkstoffen für die Feuerfestauskleidung bzw. den Mantel des Schachts soll wiederum sichergestellt werden, dass die elektrische Energie lediglich im Bereich des Koksbetts zur Wirkung gelangt.

Zur Lösung dieser Aufgabe besteht das erfindungsgemäße Verfahren ausgehend von dem eingangs genannten Verfahren im Wesentlichen darin, dass Reaktionsgas in wenigstens einem axialen Bereichs des Koksbettes unterhalb eines kopfseitigen Induktionskörpers, welcher dazu geeignet ist, das Koksbett auf die Zündtemperatur des Kohlenstoffs zu bringen, abgesaugt wird und der Metall-Regulus sowie die Schlackenschmelze am unteren Ende des Koksbettes abgestochen wird. Dadurch, dass das Reaktionsgas in einem axialen Bereich des Koksbetts zwischen zwei Induktionskörpern abgesaugt wird und der Metall-Regulus und die Schlackenschmelze am unteren Ende des Koksbetts abgestochen werden, wird im Inneren der Kokssäule eine Gasführung erzielt, bei welcher ausgehend vom kalten Aufgabeende Reaktionsgase zu der Absaugöffnung angesaugt werden und somit in einem ersten axialen Teilbereich im Gleichstrom mit der Charge geführt werden, wohingegen eine weitere Teilmenge der Reaktionsgase vom heißen Abstichende her gleichfalls zur Absaugöffnung hin gesaugt wird, sodass in diesem zweiten axialen Teilbereich des Koksbetts bzw. der Kokssäule die Gase im Gegenstrom zur Schmelze geführt werden. Eine derartige Gasführung hat den Vorteil, dass der Anteil hochviskoser heißer Gase wesentlich verringert werden kann und die im Bereich des Abstichendes noch gebildeten Gase ihre fühlbare Wärme im Gegenstrom zur absinkenden Schmelze abbauen können. Der Bereich unterhalb des genannten Induktionskörpers zeichnet sich somit durch eine Temperatur aus, die geringer ist als die Temperatur des Koksbetts am Abstichende, aber andererseits deutlich höher ist als die Gastemperatur am kalten Aufgabeende, sodass durch geeignete Wahl der Position der Absaugöffnung tatsächlich in jedem Punkt sichergestellt werden kann, dass mit Schadstoffen belastete Gase zuverlässig abgesaugt werden können, ohne neuerlich Kreisläufe im Inneren des Schachtofens bzw. des Koksbetts auszubilden.

Mit Vorteil wird das Verfahren hierbei so durchgeführt, dass die Temperatur, bei der das Reaktionsgas unter Anwendung von Unterdruck abgezogen wird, oberhalb des Kondensationspunktes von abzutrennenden Schadstoffen und insbesondere oberhalb von 910° C liegt. Eine Temperatur oberhalb von 910° C wird hierbei in Hinblick auf Zinkdämpfe gewählt, deren Kondensationspunkt bei 907° C unter Atmosphärendruck liegt. Wenn lediglich Phosphordampf als Schadstoff vorliegt, kann die Absaugtemperatur entsprechend niedriger und über 290°C gewählt werden. Die Absaugöffnung wird hierbei unter leichten Unterdruck gesetzt, wobei neben Zinkdampf auch Phosphordampf abgesaugt werden kann. Durch entsprechende Einstellung der Temperatur, bei welcher die Absaugung erfolgt, lässt sich eine Reihe von Schadstoffen selektiv absaugen, wodurch die Anzahl der möglichen Chargen wesentlich erhöht wird, da es nunmehr möglich ist, auch Problemstoffe, welche Zink, Kohlenstoff, Kohlenwasserstoffe, Alkalien, Halogene, Blei, Cadmium, Quecksilber oder organische Pyrolyseprodukte enthalten, entsprechend aufzuarbeiten. Insbesondere feste Abfallstoffe weisen bei thermischer Vorbehandlung zumeist einen hohen Anteil flüchtiger Substanzen auf, zu welchen neben den genannten Metalldämpfen vor allen Dingen Zink- und Cadmiumkondensation, Alkalihalogene sowie Teerkondensation in Schachtöfen als problematisch einzustufen sind und zu unerwünschten Kreisläufen führen. Durch die erfindungsgemäße Absaugung wird eine derartige pyrometallurgische Raffination in einem Schachtofen nun problemlos möglich, wobei der Gasabzug prinzipiell im Bereich oberhalb der Kondensationstemperatur der jeweils relevanten flüchtigen Schadstoffe liegen soll. Die Koks- und Gasvorwärmung auf diese jeweilige Zieltemperatur erfolgt hierbei im Gleichstrombereich, d.h. in demjenigen Bereich, in welchem die Charge und die Gase gleichsinnig durch das Koksbett geleitet werden. Erst die weitere Schmelzreduktion erfolgt anschließend im Gegenstrombereich, wobei dieser für die beiden Bereiche gemeinsame Gasabzug die interne Kreislaufbildung verhindert.

Das abgezogene Reaktionsgas kann bevorzugt einem Gasreformer zugeführt werden, in welchem beispielsweise Zink mit Wasserdampf zu Zinkoxid und H₂ umgesetzt wird, wodurch ein entsprechend gereinigtes, abgekühltes Gas mit hohem Heizwert gebildet werden kann.

Die unterschiedlichen axialen Teilbereiche des Koksbetts bzw. der Kokssäule können bevorzugt so betrieben werden, dass der kopfseitige Induktionskörper mit einer Frequenz von 20 - 120 kHz und ein dem Abstichende benachbarter Induktionskörper vorgesehen ist, welcher mit einer Frequenz von 1 - 10 kHz betrieben wird. Auf diese Weise wird dem Umstand Rechnung getragen, dass im Gleichstrombereich, in welchem eine Reduktion noch nicht in hohem Ausmaß erfolgt, die Ankopplung an oxidische Bestandteile höhere Frequenzen erfordert als die Ankopplung im Reduktionsbereich, in welchem bereits hohe Mengen an metallischen Schmelzen und Koks höherer Temperatur vorliegen, welche bei niedrigeren Frequenzen ankoppeln. Durch diese Maßnahme kann der Energieverbrauch an die jeweils tatsächlichen Bedürfnisse angepasst werden. Mittels der den Abstich benachbarten Induktionsspulen kann im Fall von Chrom- und Vanadiumoxide enthaltendem Aufgabegut ein induktives Überhitzen auf über 1700° C erzielt werden, wodurch das Reduktionspotential auf Werte erhöht werden kann, bei welchen SiO₂ gezielt zu Si reduziert werden und somit der Si-Gehalt der Metallschmelzen selektiv eingestellt werden kann.

Gemäß einer weiteren bevorzugten Verfahrensweise wird so vorgegangen, dass die Absaugung des Reaktionsgases aus mehreren axial aufeinander folgenden Ringräumen vorgenommen wird, wobei vorzugsweise der Saugleitungsdruck aus in Achsrichtung aufeinander folgenden Ringräumen im Wesentlichen gleich bleibend oder in Achsrichtung zunehmend gewählt wird. Auf diese Weise wird ein fraktionierter Abzug von Gasen mit unterschiedlichem Dampfdruck möglich, wobei bei der relativ höchsten Temperatur auch Alkalihalogenide abgezogen und in der Folge aus dem Gas ausgewaschen werden können. Die sukzessive Zunahme des Drucks in Achsrichtung des Reaktors führt dazu, dass die Saugleistung in Achsrichtung abnimmt, sodass die jeweils flüchtigeren Verunreinigungen sicher abgezogen werden können und erst später reduzierte Metalldämpfe und bei höheren Temperaturen flüchtige Wertstoffe, wie z.B. Zn-Dampf, nicht mit derartige flüchtigen Komponenten verunreinigt abgesaugt werden.

Mit Vorteil kann auch so vorgegangen werden, dass den aufgegebenen Schlacken und Stäuben saure Additive, wie z.B. SiO₂ oder Al₂O₃ zur Absenkung der Schlacken-Basizität zugesetzt werden, wodurch eine Abnahme der Schlacken-Viskosität und eine Verschlackung von Alkalien erfolgen kann.

Die erfindungsgemäße Vorrichtung zur Durchführung dieses Verfahrens besteht in einem induktiv beheizbaren, mit einem stückigen Koksbett befüllbaren Schachtofen zur Reduktion von metalloxidischen, ggf. mit Organika belasteten Schlacken aus elektrisch isolierendem, feuerfesten Material, in welchem ein Temperaturgradient einstellbar ist, mit wenigstens einem kopfseitig angeordneten, gekühlten Induktionskörper. Ein derartiger Schachtofen ist prinzipiell der WO 2006/079132 A1 zu entnehmen. Erfindungsgemäß wird diese Ausbildung nun dahingehend weitergebildet, dass der Schachtofen in einem axialen Bereich, in welchem eine Temperatur oberhalb des Kondensationspunktes von abzutrennenden Schadstoffen herrscht und welcher unterhalb des kopfseitig angeordneten, gekühlten Induktionskörpers liegt, einen Sauganschluss aufweist und am unteren Ende des Ofens eine Öffnung zum Abstechen des Metall-Regulus und der Schlackenschmelze vorgesehen ist. Mit einer derartigen Einrichtung, bei welcher das kalte Aufgabeende ohne Deckel ausgebildet sein kann, gelingt es, eine konventionelle Möllerung wie beim klassischen Kupolofen vorzunehmen, wobei im Prinzip auch vorgewärmtes und kalziniertes Material aufgegeben werden kann. Die Aufgabe erfolgt aber in fester Form und kann insbesondere in Form von Staub erfolgen.

Erfindungsgemäß ist diese Vorrichtung mit Vorteil so ausgebildet, dass der Ofen im Bereich unterhalb des kopfseitigen Induktionskörpers einen Bereich mit vergrößertem Durchmesser aufweist, wobei eine derartige Ausbildung zu einer geringeren Bauhöhe des Ofens führt und für den Gegenstrombereich, in welchem die Schmelz- und Reduktionsarbeit zu leisten ist, ein entsprechendes Volumen bereitstellt. Im Übergang zwischen dem vorangehenden und induktiv beheizten Bereich des Schachtofens ergibt sich an der Stelle der Verbreiterung ein entsprechender Ringraum, aus welchem die Reaktionsgase in besonders einfacher Weise ausgetragen werden können, wobei hier ein entsprechender Saugdruck angewendet werden muss, welcher beispielsweise durch ein Sauggebläse erzeugt werden kann.

Induktionskörper bzw. Induktionsspulen, welche im Rahmen der Erfindung zum Einsatz kommen können, bedürfen in aller Regel einer entsprechenden Kühlung. Mit Vorteil ist die Ausbildung hierbei so getroffen, dass die Induktionskörper in das feuerfeste Material des Schachtofens eingegossen sind, wobei in diesem Falle die Kühlung der Induktionskörper gleichzeitig die Kühlung des feuerfesten Materials ggf. unter gezielter Ausbildung eines festen "Schlacken-Pelzes", der auch bereits metallisierte Metalle enthalten kann, des Schachtofens gewährleistet. Eine derartige Kühlung ist im Fall von feuerfesten Materialien, welche bei höheren Temperaturen elektrisch leitend werden, von besonderer Bedeutung, da ja die elektrische Energie mit der erfindungsgemäßen Einrichtung vollständig auf die Kokssäule, nicht aber auf die Auskleidung übertragen werden soll. Diese Parameter bedingen, dass beispielsweise Silizumcarbid als Feuerfestmaterial nicht in Betracht kommt und dass Aluminiumoxid als besonders bevorzugt zu gelten hat, da ein derartiges Feuerfestmaterial auch bei hohen Temperaturen, ebenso wie bei Wahl von Magnesiumoxid, noch elektrisch isolierend bleibt. Eine Reihe anderer Feuerfestmaterialien zeichnet sich dadurch aus, dass sie mit zunehmender Temperatur leitfähiger werden, wobei in diesen Fällen die Kühlung von elementarer Bedeutung ist.

In besonders einfacher Weise ist die Ausbildung hierbei so getroffen, dass die Induktionskörper als Spulen ausgeführt sind, wobei alternativ die Induktionskörper als geschlitzte Manschetten ausgeführt sein können.

Wie bereits erwähnt, ist erfindungsgemäß die Ausbildung mit Vorteil so getroffen, dass das kalte Aufgabeende des Schachtofens offen ausgebildet ist. Am Umfang des Schachtofens können in unterschiedlichen axialen Bereichen Gasanschlussöffnungen münden, welche unterschiedlichen Zwecken dienen können. Mit Vorteil sind im Bereich des dem kalten Aufgabeende benachbarten, kopfseitigen Induktionskörpers Düsen zum Spülen des Koksbettes mit Sauerstoff und/oder Heißwind vorgesehen, wobei zusätzlich in besonders vorteilhafter Weise nahe dem Abstichende Düsen zum Spülen des Koksbettes mit Sauerstoff und/oder Heißwind vorgesehen sind. An dieser Stelle kann mit Vorteil auch eine Zugabe von Brennstoff mit Sauerstoff erfolgen, um eine Absenkung des elektrischen Energiebedarfs zu erzielen. Mit Vorteil ist auch die Möglichkeit der Zugabe von billigen, Cl-haltigen Alternativbrennstoffen möglich.

In besonders vorteilhafter Weise kann das Abstichende als gefluteter Abstich ausgeführt sein, wobei die Kokssäule aufgrund des Dichteunterschieds auf der Schlacken-/Metallschmelze auf schwimmt.

Die Erfindung wird nachfolgend anhand eines in der Zeichnung schematisch dargestellten Ausführungsbeispiels näher erläutert. In dieser zeigen Fig. 1 eine erste Ausbildung des erfindungsgemäß zum Einsatz gelangenden Schachtofens im Schnitt, Fig. 2 eine abgewandelte Ausbildung in analoger Darstellung und Fig. 3 eine abgewandelte Ausbildung des Schachtofens mit mehreren Sauganschlüssen.

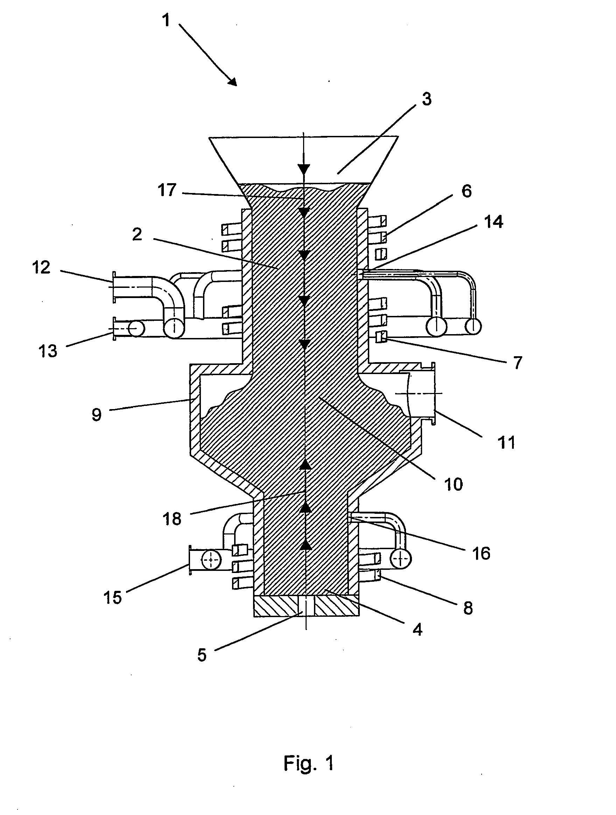

In Fig. 1 ist ein Schachtofen mit 1 bezeichnet, in welchem sich zur Reduktion oxidischer Schlacken ein Koksbett 2 befindet, mit einem kalten Aufgabeende 3 und einem heißen Abstichende 4. Am heißen Abstichende ist eine Öffnung 5 zum Abstechen des Metall-Regulus und der Schlackenschmelze vorgesehen. In axialen Bereichen des Schachtofens sind Induktionskörper 6, 7 und 8 vorgesehen, welche unabhängig voneinander regelbar sind und der induktiven Beheizung des Koksbettes 2 dienen. Der Mantel 9 des Schachtofens ist aus elektrisch isolierendem, feuerfestem Material gefertigt und weist in einem Bereich mit vergrößertem Durchmesser 10 einen Sauganschluss 11 auf, durch welchen abzutrennende Schadstoffe abgesaugt werden können. Der Schachtofen 1 weist weiters im Bereich der kopfseitigen Induktionskörper 6 und 7 Zuleitungen 12 und 13 auf, welche Düsen 14, die den Mantel 9 des Schachtofens 1 durchsetzen, zur Spülung des Koksbettes 2 mit Sauerstoff und/oder Heißwind versorgen. Weiters ist nahe dem Abstichende 4 eine Zuleitung 15 für Sauerstoff vorgesehen, welche den Mantel 9 durchsetzende Düsen 16 zur Spülung des Koksbettes mit Sauerstoff und/oder Heißwind versorgt.

Dadurch, dass bei dem erfindungsgemäßen Schachtofen 1 zur Reduktion von oxidischen Schlacken in dem axialen Bereich zwischen den kopfseitigen Induktionskörpern 6 und 7 und dem dem heißen Abstichende benachbarten Induktionskörper 8 Reaktionsgas durch den Sauganschluss 11 aus dem Bereich mit vergrößertem Durchmesser 10 abgesaugt wird, kommt es erfindungsgemäß im Schachtofen 1 zu einer Gasführung, wie sie schematisch durch die Pfeile 17, 18 angedeutet sind, wobei die Strömung im Aufgabebereich entsprechend dem Pfeil 17 gleichsinnig mit dem Möller und im Bereich des Abstiches bzw. zum Sauganschluss 11 entsprechend den Pfeilen 18 gegensinnig zum Möller bzw. der Schmelze geführt ist.

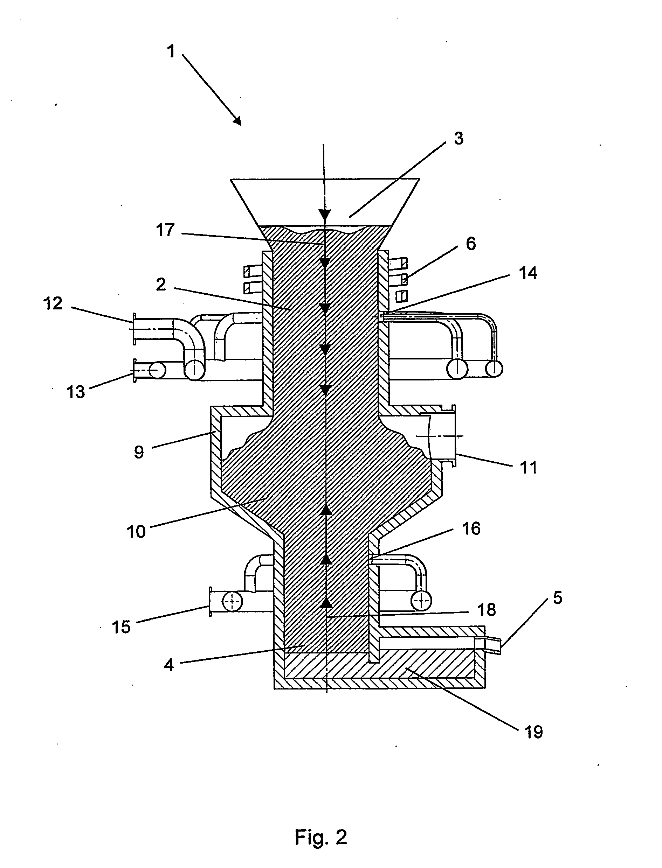

In Fig. 2 ist eine Variante des erfindungsgemäßen Schachtofens mit geflutetem Abstich gezeigt, wobei ähnliche oder gleiche Bauteile mit gleichen Bezugszeichen wie in Fig. 1 versehen wurden. Bei dieser Variante sind in dem dem Abstichende 4 benachbarten Bereich keine Induktionskörper vorgesehen, wobei die Regelung des Temperaturgradienten im Bereich unterhalb des kopfseitig angeordneten Induktionskörpers lediglich durch das Einblasen von Gasen bewerkstelligt wird. Die induktive Beheizung am Kopfende wird bis zur Ausbildung einer Koksglut aufrechterhalten, worauf mit Sauerstoff, Heißwind oder Brennstoffen die gewünschte Schmelztemperatur eingestellt wird. Am Abstichende 4 schwimmt die Kokssäule 2 auf der Schlacken-/Metallschmelze 19 auf, welche über die Abstichöffnung 5 abgezogen werden kann.

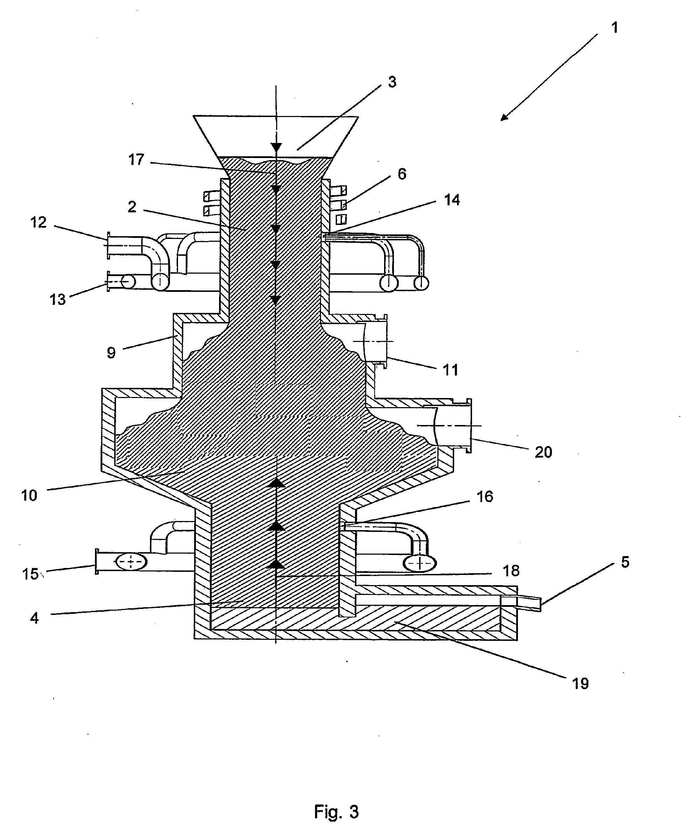

In Fig. 3 ist eine Variante des erfindungsgemäßen Schachtofens mit geflutetem Abstich gezeigt, wobei die Bezugszeichen aus den vorangehenden Figuren beibehalten wurden. Bei dieser Variante ist in Achsrichtung zwischen dem Sauganschluss 11 und dem abstichseitigen Ende des Schachtofens ein weiterer Sauganschluss 20 angeordnet, welcher es durch geeignete Wahl der Druckverhältnisse zwischen dem Sauganschluss 11 und dem Sauganschluss 20 gestattet, Stoffe mit unterschiedlichen Dampfdrücken fraktioniert abzuziehen.

## Patentansprüche

1. Verfahren zur Reduktion von oxidischen, ggf. mit Organika belasteten Schlacken und Stäuben unter Einsatz eines induktiv beheizbaren, sich in einer Achsrichtung erstreckenden und einen Temperaturgradienten aufweisenden Koksbettes, **dadurch gekennzeichnet, dass** Reaktionsgas in wenigstens einem axialen Bereich des Koksbettes unterhalb eines dem kalten Aufgabeende benachbarten, kopfseitigen Induktionskörpers abgesaugt wird und der Metall-Regulus sowie die Schlackenschmelze am unteren Ende des Koksbettes abgestochen wird.

2. Verfahren nach Anspruch 1 **dadurch gekennzeichnet, dass** die Temperatur, bei der das Reaktionsgas unter Anwendung von Unterdruck abgezogen wird, oberhalb des Kondensationspunktes von abzutrennenden Schadstoffen und insbesondere oberhalb von 910° C liegt.

3. Verfahren nach Anspruch 1 oder 2 **dadurch gekennzeichnet, dass** das abgezogene Reaktionsgas einem Gasreformer zugeführt wird.

4. Verfahren nach einem der Ansprüche 1, 2 oder 3 **dadurch gekennzeichnet, dass** der dem Aufgabeende benachbarte Induktionskörper mit einer Frequenz von 20 - 120 kHz und ein dem Abstichende benachbarter Induktionskörper mit einer Frequenz von 1 - 10 kHz betrieben wird.

5. Verfahren nach einem der Ansprüche 1 bis 4, **dadurch gekennzeichnet, dass** die Absaugung des Reaktionsgases aus mehreren axial aufeinander folgenden Ringräumen vorgenommen wird.

6. Verfahren nach Anspruch 5, **dadurch gekennzeichnet, dass** der Saugleitungsdruck aus in Achsrichtung aufeinander folgenden Ringräumen im Wesentlichen gleich bleibend oder in Achsrichtung zunehmend gewählt wird.

7. Verfahren nach einem der Ansprüche 1 bis 6, **dadurch gekennzeichnet, dass** aus einer ersten dem Aufgabeende benachbarten Ringraumebene flüchtige Halogenide und CO und aus einer nachfolgenden Ringraumebene Metalldämpfe, insbesondere Zn-Dampf mit CO, abgezogen werden.

8. Verfahren nach einem der Ansprüche 1 bis 7, **daduch gekennzeichnet, dass** den aufzugebenen Schlacken oder Stäuben saure Additive, wie z.B. SiO₂ oder Al₂O₃ zur Absenkung der Basizität zugesetzt werden.

9. Induktiv beheizbarer, mit einem stückigen Koksbett (2) befüllbarer Schachtofen (1) zur Reduktion von metallischen, ggf. mit Organika belasteten Schlacken aus elektrisch isolierendem, feuerfesten Material, in welchem ein Temperaturgradient einstellbar ist, mit wenigstens einem kopfseitig angeordneten, gekühlten Induktionskörper (6,7) , **dadurch gekennzeichnet, dass** der Schachtofen (1) in einem axialen Bereich, in welchem eine Temperatur oberhalb des Kondensationspunktes von abzutrennenden Schadstoffen herrscht und welcher unterhalb des kopfseitig angeordneten Induktionskörpers (6,7) liegt, einen Sauganschluss (11) aufweist und am unteren Ende (4) des Schachtofens (1) eine Öffnung (5) zum Abstechen des Metall-Regulus (19) und der Schlackenschmelze (19) vorgesehen ist.

10. Vorrichtung nach Anspruch 9 **dadurch gekennzeichnet, dass** der Schachtofen (1) im Bereich unterhalb des kopfseitig angeordneten Induktionskörpers (6,7) einen Bereich mit vergrößertem Durchmesser (10) aufweist.

11. Vorrichtung nach Anspruch 9 oder 10, **dadurch gekennzeichnet, dass** die Induktionskörper (6,7,8) in das feuerfeste Material des Schachtofens eingegossen sind.

12. Vorrichtung nach einem der Ansprüche 9 bis 12, **dadurch gekennzeichnet, dass** die Induktionskörper (6,7,8) als Spulen ausgeführt sind.

13. Vorrichtung nach einem der Ansprüche 9, 10 oder 11, **dadurch gekennzeichnet, dass** die Induktionskörper (6,7,8) als geschlitzte Manschetten ausgeführt sind.

14. Vorrichtung nach einem der Ansprüche 9 bis 13, **dadurch gekennzeichnet, dass** das kalte Aufgabeende (3) des Schachtofens (1) offen ausgebildet ist.

15. Vorrichtung nach einem der Ansprüche 9 bis 14, **dadurch gekennzeichnet, dass** im Bereich des dem kalten Aufgabeende (3) benachbarten Induktionskörpers (6,7) Düsen (14) zum Spülen des Koksbettes (2) mit Sauerstoff und/oder Heißwind vorgesehen sind.

16. Vorrichtung nach einem der Ansprüche 9 bis 15, **dadurch gekennzeichnet, dass** nahe dem Abstichende (4) Düsen (14) zum Spülen des Koksbettes (2) mit Sauerstoff und/oder Heißwind und/oder zum Einbringen von Brennstoffen, insbesondere alternativen Brennstoffen vorgesehen sind.

## Claims

1. A method for reducing oxidic slags and dusts possibly loaded with organics, using an inductively heatable coke bed extending in an axial direction and having a temperature gradient, **characterized in that** reaction gas is sucked off in at least one axial region of the coke bed below a head-side induction body arranged in the vicinity of the cold charging end, and that the metal regulus and the slag melt are tapped on the lower end of the coke bed.

2. A method according to claim 1, **characterized in that** the temperature at which the reaction gas is drawn off while applying a negative pressure lies above the condensation point of the noxious substances to be removed and, in particular, above 910°C.

3. A method according to claim 1 or 2, **characterized in that** the withdrawn reaction gas is fed to a gas reformer.

4. A method according to any one of claims 1, 2 or 3, **characterized in that** the induction body arranged in the vicinity of the charging end is operated at a frequency of 20 - 120 kHz and an induction body arranged in the vicinity of the tap end is operated at a frequency of 1 - 10 kHz.

5. A method according to any one of claims 1 to 4, **characterized in that** the suction of the reaction gas is performed from several axially consecutive annular spaces.

6. A method according to claim 5, **characterized in that** the suction line pressure from axially consecutive annular spaces is selected to remain substantially constant or increase in the axial direction.

7. A method according to any one of claims 1 to 6, **characterized in that** from a first annular space level adjacent the charging end volatile halides and CO, and from a consecutive annular space level metal vapors, in particular Zn vapor with CO, are withdrawn.

8. A method according to any one of claims 1 to 7, **characterized in that** acidic additives such as, e.g., SiO₂ or Al₂O₃ are added to the slags or dusts to be charged, in order to lower the slag basicity.

9. An inductively heatable shaft furnace (1) chargeable with a lumpy coke bed (2), for the reduction of metallic slags possibly loaded with organics and made of an electrically insulating refractory material, in which a temperature gradient is adjustable, including at least one cooled induction body (6,7) arranged on the head side, **characterized in that that** the shaft furnace (1) comprises a suction connection (11) in an axial region in which the prevailing temperature is above the condensation point of the noxious substances to be removed and which is located below the induction body (6, 7) arranged on the head side, and that an opening (5) for tapping the metal regulus (19) and the slag melt (19) is provided on the lower end (4) of the furnace (1).

10. A device according to claim 9, **characterized in that that** the shaft furnace (1), in the region below the induction body (6, 7) arranged on the head side, comprises a region with an enlarged diameter (10).

11. A device according to claim 9 or 10, **characterized in that that** the induction bodies (6,7,8) are cast into the refractory material of the shaft furnace.

12. A device according to any one of claims 9 to 12, **characterized in that** the induction bodies (6,7,8) are designed as coils.

13. A device according to any one of claims 9, 10 or 11, **characterized in that** the induction bodies (6,7,8) are designed as slotted collars.

14. A device according to any one of claims 9 to 13, **characterized in that** the cold charging end (3) of the shaft furnace (1) is designed to be open.

15. A device according to any one of claims 9 to 14, **characterized in that** nozzles (14) for flushing the coke bed (2) with oxygen and/or hot blast are provided in the region of the induction body (6,7) arranged in the vicinity of the cold charging end (3).

16. A device according to any one of claims 9 to 15, **characterized in that** nozzles (14) for flushing the coke bed (2) with oxygen and/or hot blast, and/or for introducing fuels, in particular alternative fuels, are provided near the tap end (4).

## Revendications

1. Procédé de réduction de scories et de poussières oxidées, éventuellement chargées de matières organiques, en utilisant un lit de coke pouvant être chauffé par induction, s'étendant dans une direction axiale et présentant un gradient de température, **caractérisé en ce que** du gaz de réaction est extrait par aspiration dans au mins une zone axiale du lit de coke située sous un corps d'induction côté tête, adjacent à l'extrémité de chargement froide, et le régule de métal ainsi que la masse fondue de scories sont évacués par coulée à l'extrémité inférieure du lit de coke.

2. Procédé selon la revendication 1, **caractérisé en ce que** la température à laquelle le gaz de réaction est évacué par application d'une dépression est supérieure au point de condensation des substances nocives à éliminer, et en particulier supérieure à 910 °C.

3. Procédé selon la revendication 1 ou 2, **caractérisé en ce que** le gaz de réaction évacué est transféré vers un reformeur de gaz.

4. Procédé selon l'une quelconque des revendications 1, 2 ou 3, **caractérisé en ce que** le corps d'induction adjacent à l'extrémité de chargement est mis en fonctionnement à une fréquence de 20 à 120 kHz et un corps d'induction adjacent à l'extrémité de coulée est mis en fonctionnement à une fréquence de 1 à 10 kHz.

5. Procédé selon l'une quelconque des revendications 1 à 4, **caractérisé en ce que** l'évacuation par aspiration du gaz de réaction est réalisée à partir de plusieurs espaces annulaires axialement consécutifs.

6. Procédé selon la revendication 5, **caractérisé en ce que** la pression de ligne d'aspiration à partir d'espaces annulaires consécutifs dans la direction axiale est choisie pour rester sensiblement constante ou pour augmenter dans la direction axiale.

7. Procédé selon l'une quelconque des revendications 1 à 6, **caractérisé en ce que** des halogénures volatiles et du CO sont extraits à partir d'un premier niveau d'espaces annulaires adjacent à l'extrémité de chargement, et des vapeurs de métaux, en particulier de la vapeur de Zn avec du CO, sont extraites à partir d'un niveau d'espaces annulaires suivant.

8. Procédé selon l'une quelconque des revendications 1 à 7, **caractérisé en ce que** des additifs acides, tels que par exemple SiO₂ ou Al₂O₃, sont ajoutés aux scories ou aux poussières à charger afin de réduire la basicité.

9. Four à cuve (1) pouvant être chauffé par induction et pouvant être rempli d'un lit de coke en morceaux (2), pour réduire les scories métalliques, éventuellement chargées de matières organiques, constitué d'un matériau réfractaire électriquement isolant, dans lequel un gradient de température peut être réglé, comportant au moins un corps d'induction refroidi (6, 7) arrangé côté tête, **caractérisé en ce que** le four à cuve (1) se situe dans une zone axiale dans laquelle règne une température supérieure au point de condensation des substances nocives à éliminer et qui est inférieure à celle du corps d'induction (6, 7) arrangé côté tête, comporte un raccord d'aspiration (11) et une ouverture (5) est prévue à l'extrémité inférieure (4) du four à cuve (1) pour évacuer par coulée le régule de métal (19) et la masse fondue de scories (19).

10. Dispositif selon la revendication 9, **caractérisé en ce que** le four à cuve (1) présente une zone à diamètre élargi (10) dans la zone située sous le corps d'induction (6, 7) arrangé côté tête.

11. Dispositif selon la revendication 9 ou 10, **caractérisé en ce que** les corps d'induction (6, 7, 8) sont coulée dans le matériau réfractaire du four à cuve.

12. Dispositif selon l'une quelconque des revendications 9 à 12, **caractérisé en ce que** les corps d'induction (6, 7, 8) sont réalisés sous forme de bobines.

13. Dispositif selon l'une quelconque des revendications 9, 10 ou 11, **caractérisé en ce que** les corps d'induction (6, 7, 8) sont réalisés sous forme de manchons fendus.

14. Dispositif selon l'une quelconque des revendications 9 à 13, **caractérisé en ce que** l'extrémité de chargement froide (3) du four à cuve (1) est réalisés ouverte.

15. Dispositif selon l'une quelconque des revendications 9 à 14, **caractérisé en ce que** des buses (14) sont prévues dans la zone du corps d'induction (6, 7) au voisinage de l'extrémité de chargement froide (3) pour rinceur le lit de coke (2) avec de 1' oxygène et/ou du vent, chaud.

16. Dispositif selon l'une quelconque des revendications 9 à 15, **caractérisé en ce que** des buses (14) sont prévues à proximité de l'extrémité de coulée (4) pour rincer le lit de coke (2) avec de l'oxygène et/ou du vent chaud et/ou pour introduire des combustibles, en particulier des combustibles alternatifs.
